# DEMANDE DE BREVET EUROPEEN

(11) **EP 1 067 403 A1**
(43) Date de publication de la demande: **10.01.2001**
(21) Numéro de dépôt: 00401906.3
(22) Date de dépôt: 04.07.2000
(51) Int. Cl.: G01T 1/29, G01T 1/164

(54) **Matrice de détecteurs de photons**

(30) Priorité: 08.07.1999 FR 9908860
(71) Demandeur: COMMISSARIAT A L'ENERGIE ATOMIQUE, 75752 Paris Cédex 15 (FR)
(72) Inventeur: Verger, Loick, 38000 Grenoble (FR); Rustique, Jacques, 38170 Seyssinet (FR); Peyret, Olivier, 38120 Le Fontanil (FR)
(74) Mandataire: Ilgart, Jean-Christophe

(57) **Abrégé**

Le réseau de détecteurs comprend deux couches (9, 10) de détecteurs (11, 15) superposés, affectés respectivement à la captation et à la conversion de photons de deux énergies différentes, ce qui permet d'utiliser le réseau (8) pour des procédés différents, tels que les procédés PET et SPECT en tomographie d'imagerie médicale.

## Description

L'invention concerne une matrice de détecteurs de photons.

Nous nous plaçons notamment dans le domaine technique de l'imagerie médicale en médecine nucléaire, et en particulier des deux procédés courants de tomographie à émission de positrons et de tomographie à calcul d'émission de photons individuels, couramment désignés par leurs initiales PET et SPECT d'après l'anglais.

Les dispositifs de mesure utilisés dans ces deux procédés consistent en des matrices bidimensionnelles de détecteurs qui convertissent les photons en charges électriques transmises à un système électronique de mesure. Des méthodes de calcul différentes dans les deux procédés, et qui ne sont pas modifiées par l'invention, permettent de déterminer le lieu d'origine de chaque photon d'après le détecteur sur lequel il est envoyé.

Mais la conversion en charges électriques des photons est délicate, car les détecteurs doivent à la fois présenter un taux de conversion des photons élevé afin de réduire la proportion de ceux qui peuvent sortir des détecteurs après les avoir traversés, et une bonne migration des charges électriques dans le détecteur, avec un nombre réduit de charges piégées dans la matière du détecteur et qui ne parviennent pas au système électronique. Les contraintes de construction des détecteurs sont strictes en pratique, et comme les énergies des photons sont différentes dans les deux procédés (511 keV pour le procédé PET et 140 keV pour le procédé SPECT), les détecteurs construits pour l'un des procédés sont inutilisables pour l'autre, ce qu'on déplore car la construction d'installations universelles, permettant d'appliquer un procédé ou l'autre selon les besoins, est rendue plus difficile.

Aujourd'hui, les détecteurs utilisés dans les gamma-caméras du procédé SPECT et les tomographes du procédé PET sont formés de scintillateurs qui convertissent les photons en lumière, et sont associés à des photomultiplicateurs situés derrière eux, où la lumière est convertie en charges électriques recueillies par des électrodes. On utilise en pratique souvent le BGO ou le LSO pour le mode PET et le NaI pour le mode SPECT ; un mélange du LSO et du NaI peut toutefois être utilisé pour l'un ou l'autre mode, réalisant ainsi des détecteurs aux caractéristiques intermédiaires des idéales pour les deux procédés. L'article "Coïncidence Imaging with a Dual-Head Scintillation Caméra", paru dans "The Journal of Nuclear Medicine", vol. 40, n°3, mars 1999, p. 432-440, traite de cette question. L'utilisation de détecteurs qui conviennent plus particulièrement à l'un des procédés produit évidemment une image moins bonne si on tente de l'appliquer à l'autre des procédés.

On s'intéresse ces temps-ci à l'emploi de certains semi-conducteurs tels que les matériaux de la famille du tellurure de cadmium (tel que le CdZnTe ou le CdTe) pour remplacer les scintillateurs et les photo-multiplicateurs des détecteurs, car ces matériaux semi-conducteurs, qui convertissent directement les photons en charges électriques, possèdent certains avantages : amélioration du contraste de l'image en offrant une meilleure résolution de mesure d'après l'énergie des photons en mode SPECT et augmentation de la sensibilité en mode PET (aptitude à traiter un grand nombre de photons simultanément). Mais de telles propriétés ne se prêtent pas à une détection conjointe des photons d'énergies différentes des procédés mentionnés, et en effet, on ne connaît pas encore de détecteur à semi-conducteur offrant cette possibilité.

L'objet de l'invention est pourtant de fournir une matrice composée de tels détecteurs, dans laquelle la difficulté mentionnée ci-dessus est résolue.

Sous sa forme la plus générale, l'invention concerne une matrice de détecteurs de photons composée d'un réseau plan de détecteurs, les détecteurs comprenant un matériau semi-conducteur convertissant les photons en charges électriques et des électrodes captant les charges et reliées à un système électronique de mesure, caractérisée en ce que les détecteurs sont formés de deux couches du matériau semi-conducteur, les électrodes et le système électronique sont situés sur chacune des couches (notamment derrière elles) et le système électronique comprend une partie apte à détecter des photons d'une première énergie, située sur une première des couches et une partie apte à détecter des photons d'une deuxième énergie, située sur une seconde des couches (éventuellement derrière ces couches).

L'invention sera maintenant décrite plus en détail à l'aide des figures suivantes :

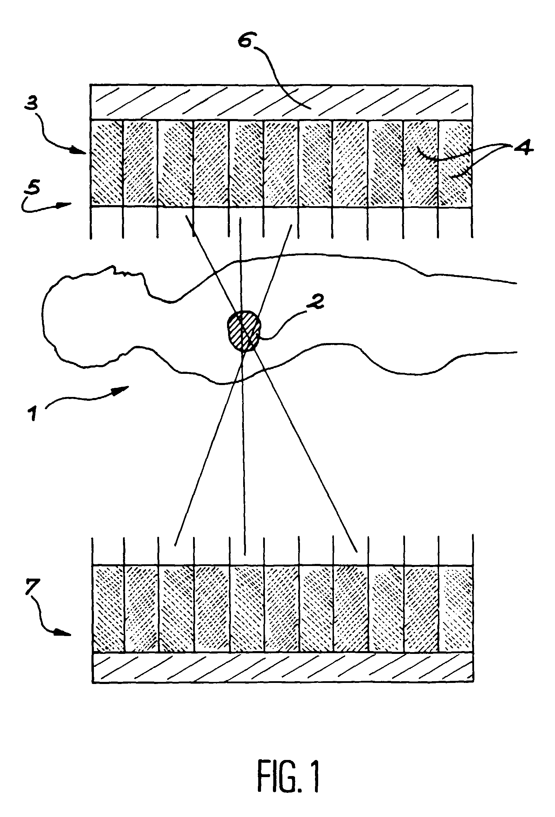

- La figure 1 est une vue générale d'explication de l'emploi de la matrice de détecteur,
- et la figure 2 est une vue de l'invention.

L'organisme d'un patient 1 a ingéré un produit chargé en un traceur radioactif qui a la propriété de se fixer dans un organe 2 déterminé dont on cherche à obtenir l'image par tomographie, et ce traceur produit des photons émis dans des directions aléatoires. Un réseau 3 de détecteurs est disposé devant l'organe 2 pour recueillir les photons qui sont émis vers lui et les convertir en charges électriques. Il comprend des détecteurs 4 situés côte à côte, précédés d'un collimateur 5, et un système électronique 6 derrière les détecteurs 4. Un tel réseau de détecteurs 3 peut appartenir à une gamma-caméra pour le procédé SPECT. Dans le cas du procédé PET, où des photons sont émis par paires dans des directions opposées, on dispose un autre réseau de détecteurs 7 semblable au précédent de l'autre côté de l'organe 2 pour que les photons appariés soient chacun reçus presque en même temps par un des réseaux de détecteurs 3 et 7 respectifs.

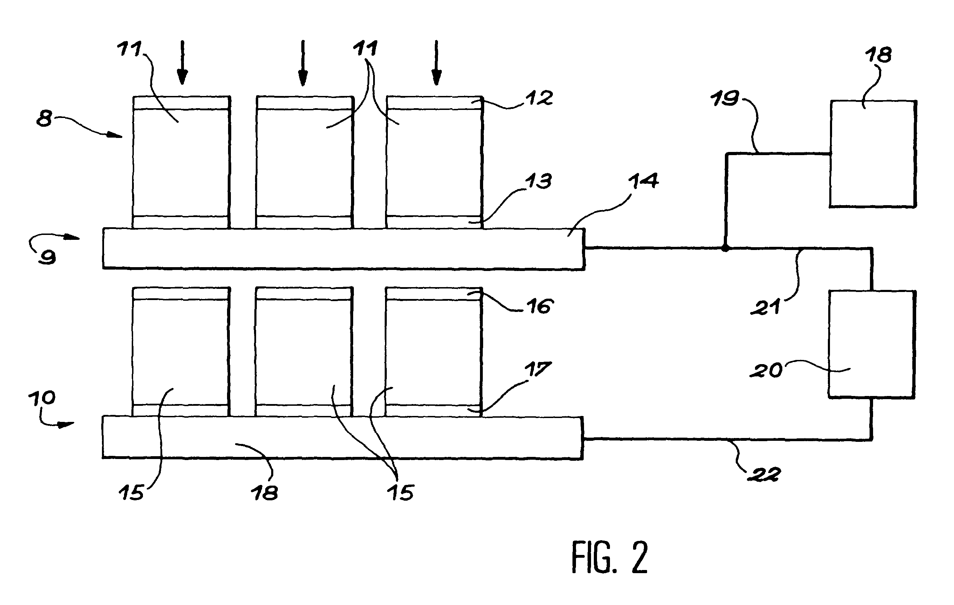

On passe maintenant à la figure 2 pour une vue d'un réseau de détecteurs conforme à l'invention et pouvant prendre la place des réseaux 3 et 7. Ce réseau, représenté partiellement, porte la référence 8 et comprend deux couches 9 et 10 superposées : la couche avant 9 comprend des détecteurs 11 de tellurure de cadmium, formés en petits blocs pouvant avoir 4x4 mm² de section et 6 mm de profondeur, et une paire d'électrodes 12 et 13 sur leurs faces avant et arrière pour produire un champ électrique axial qui dirige les charges produites par la conversion des photons vers les électrodes ; un système électronique 14 relié aux électrodes 13 situées à l'arrière recueille les électrons produits. La couche arrière 10 comprend des détecteurs 15 situés respectivement derrière les détecteurs 11, encore en tellurure de cadmium, ayant la même section de 4x4 mm² et, ici, la même profondeur de 6 mm, et qui possèdent également des électrodes 16 et 17 à l'avant et à l'arrière et un système électronique 18 relié aux électrodes arrière 17. Ces détecteurs 15 fonctionnent comme les précédents en convertissant les photons en charges électriques. Cependant, seuls leur parviennent les photons qui n'ont pas été convertis dans les détecteurs 11 de la couche avant 9, c'est-à-dire dont l'énergie a été suffisante pour les traverser. En pratique, les photons de faible énergie produits dans le procédé SPECT seront arrêtés par les détecteurs 11 de la couche avant, et les photons de plus grande énergie issus du procédé PET seront arrêtés par les détecteurs 15 de la couche arrière 10, bien que la plupart d'entre eux soient tout de même arrêtés par les détecteurs 11. Le matériau semi-conducteur CdZnTe en particulier présente des propriétés au moins équivalentes -dans les deux procédés SPECT et PET- aux propriétés des matériaux utilisés actuellement de manière individuelle, c'est-à-dire pour une seule fonction. En particulier, en mode SPECT, le CdZnTe est plus performant que le NaI. L'absorption par le système électronique 14 intermédiaire est négligeable en pratique, surtout si ce système est produit par un procédé à haute intégration tel que l'ASIC ("Application Specific Integrated Circuit"). Les systèmes électroniques 14 et 18 peuvent comprendre des préamplificateurs du signal fourni par les détecteurs, comme il est usuel, ou d'autres éléments connus dans ces applications et que l'invention ne modifie pas.

Un système de mesure spécifique du procédé SPECT et portant la référence 18 recevra donc le signal issu du système électronique 14 par une ligne 19 et sera actif quand ce procédé sera employé. Dans le cas contraire, on recourra à un autre système de mesure 20 qui recevra le signal du système électronique 14 par une ligne 21, bifurcation de la ligne 19 précédente, et le signal issu du système électronique 18 arrière par une autre ligne 22, et il sélectionnera le signal porteur de l'information juste. En pratique, une simple commutation entre les moyens 18 et 20 pourra être faite par l'utilisateur avant de commencer les mesures.

Les détecteurs 11 et 15 devraient avoir sensiblement la même section, mais ils n'auront pas forcément la même épaisseur : le choix de l'épaisseur d'un détecteur dépend en particulier de l'énergie des photons à arrêter et convertir.

On remarquera que ce système à détecteurs superposés offre l'avantage, sensible dans le procédé PET, que les électrons produits dans les détecteurs atteignent plus rapidement les électrodes 13 ou 17, ce qui accélère la formation de leurs signaux. Dans le procédé PET, on doit identifier les paires de photons parvenant presque simultanément sur les réseaux de détecteurs opposés, ce qui impose d'employer des fenêtres temporelles de détection sur les détecteurs du réseau qui reçoit le photon au trajet le plus long de la paire, dès que le photon au trajet le plus court a atteint l'autre réseau de détecteurs. Cette fenêtre doit être étroite afin de réduire les risques de détection erronée causés par des photons provenant d'autres désintégrations ou d'événements extérieurs. La rapidité de transit des électrons dans les détecteurs est favorable à l'obtention de telles fenêtres.

Il est encore favorable que les détecteurs 11 de la couche avant 9 soient de meilleure qualité cristallographique que ceux 15 de la couche arrière 10, afin qu'une réponse plus précise puisse être fournie dans le mode SPECT. Les semi-conducteurs utilisés pour de telles applications sont aujourd'hui répartis en trois classes : compteur, discriminateur ou spectrométrique, dans l'ordre de qualité croissante. Les détecteurs 11 à l'avant pourront être discriminateurs ou spectrométriques, les détecteurs 15 à l'arrière compteurs ou discriminateurs.

## Revendications

1. Matrice (8) de détecteurs de photons composée d'un réseau plan de détecteurs, les détecteurs comprenant un matériau semi-conducteur convertissant les photons en charges électriques et des électrodes captant les charges et reliées à un système électronique de mesure, caractérisé en ce que les détecteurs (11, 15) sont formés de deux couches (9, 10) du matériau semi-conducteur, les électrodes et le système électronique (14, 18) sont situés sur chacune des couches et le système électronique comprend une partie apte à détecter des photons d'une première énergie sur une première des couches et une partie apte à détecter des photons d'une deuxième énergie sur une seconde des couches.

2. Matrice selon la revendication 1, caractérisée en ce que la première couche est apte à détecter aussi des photons de la deuxième énergie.

3. Matrice selon la revendication 1, caractérisée en ce qu'elle est conçue pour une utilisation indifférente dans des procédés PET et SPECT.

4. Matrice selon la revendication 1, caractérisée en ce que le système électronique est un ASIC.

5. Matrice selon la revendication 1, caractérisée en ce que le matériau semi-conducteur est choisi dans la famille des tellurures de cadmium.
